# EUROPEAN PATENT APPLICATION

(11) **EP 2 006 255 A2**
(43) Date of publication of application: **24.12.2008**
(21) Application number: 07741340.9
(22) Date of filing: 10.04.2007
(51) Int. Cl.: C02F 11/14, B01D 21/01, C02F 1/56

(54) **METHOD FOR TREATMENT OF SLUDGE OR WASTEWATER**

(30) Priority: 12.04.2006 JP 2006109626
(71) Applicant: Dia-Nitrix Co., Ltd., Minato-ku Tokyo 105-0014 (JP)
(72) Inventor: KOMIDO, Toshiaki, Toyama-shi, Toyama 931-8601 (JP); AKIMOTO, Masahiro, Yokohama-shi, Kanagawa 230-0053 (JP)
(74) Representative: HOFFMANN EITLE
(86) International application number: PCT/JP2007/057904
(87) International publication number: WO 2007/119720

(57) **Abstract**

A method of treating sludge or wastewater involving the following steps: a swelling step which prepares a swelling liquid by adding a powdery polymer flocculant to water; a dissolution step which obtains an aqueous flocculant solution by supplying the swelling liquid to a filtration component and passing a filtering area of the filtration component; a flocculation treatment step which adds the aqueous flocculant solution to sludge or wastewater, wherein the total processing time from the time point where the powdery polymer flocculant was added to water until just before adding to sludge or wastewater to the aqueous flocculant solution is less than 3 hours.

## Description

### TECHNICAL FIELD

The present invention relates to a treatment method which flocculates sludge or wastewater using a polymer flocculant.
The present application claims priority on Japanese Patent Application No. 2006-109626 filed at the Japanese Patent Office on April 12, 2006, the content of which is incorporated herein by reference.

### BACKGROUND ART

As a method to flocculate sludge which generated at the time of liquid waste treatments, adding a diluted aqueous solution of a polymer flocculant is widely adopted. Polymer flocculants are usually sold in powder or W/O type emulsion forms, and powdery forms of polymer flocculants are superior to liquid state or emulsion type polymer flocculants on the points of homeostasis of the product, easiness of transportation, therefore powdery polymer flocculants are widely used as products. However, powdery polymer flocculants have a high molecular weight, and as for the water solution, undissolved gel referred to as an undissolved lump of powder easily remains because powdery polymer flocculants are not easy to dissolve due to their extreme high viscosity.

To prevent the generation of an undissolved lump of powder, powdery polymer flocculants are usually added little by little by stirring water to adjust the aqueous flocculant solution by dispersing or dissolving. Rapid stirring of the solution leads to deterioration of the flocculant quality since the molecular chain of the polymer flocculant which dissolved partially when stirring would be cut and the viscosity declines, therefore the aqueous flocculant solution is gently stirred. On the other hand, an undissolved lump of powder is easy to generate when stirring is too weak. Thus, there is a problem that deterioration by stirring and deterioration by change over time in the part that previously becomes a solution progresses since it takes time to completely dissolve powdery polymer flocculants by stirring. As stated above, if degradated aqueous flocculant solutions are used for flocculation treatments of sludge, dewatering process efficiency of the obtained flocculated sludge tends to be lower. However there is no alternative way of using the partially degradated solution at this point.

The following non-patent document 1 states that a polymer deteriorates when a dilute solution of powdery polymer flocculant is conserved for long periods. Specifically, it is stated that a 0.2% by mass water solution of cation flocculant is degradated approximately 20 to 30% in 5 days and a 1% by mass water solution of cation flocculant is deteriorated approximately 5 to 15% in 5 days. In addition, a method to store the water solution temporally, which powdery polymer flocculant is dissolved in high concentration (2%), in a tank is stated and it is also desirable to use the water solution in 6 hours after the dissolution.

In addition, the following patent document 1 describes a method to supply a mixture and/or processed liquid provided by grinding an undissolved lump of powder which generated after having supplied a powdery polymer flocculant in water to a flocculation tank of an effluent treatment device after storing the solution in a tank temporally.
Furthermore, the following patent document 2 describes a method to use a mixture and/or processed liquid provided by crushing an undissolved lump of powder which generated when powdery polymer flocculant was added to water, after having pooled in a tank.
[Non-patent document 1] Tokyo Metropolitan Sewage Service Corporation editor "Guide to polymer flocculant use", March 2002, p.310 to 311.
[Patent document 1] Japanese Patent No. 3184797
[Patent document 2] Japanese Patent No. 3184729

### DISCLOSURE OF INVENTION

### [Problems to be Solved by the Invention]

It is necessary to dissolve a powdery polymer flocculant with a batch-wise dissolving unit sequentially since it takes time to dissolve completely by a conventional stirring method. Storage hours tend to be long from beginning to adjust the aqueous flocculant solution until supplying the sludge by a batch-wise method. In particular, it takes more than 1 hour to dissolve by only this step, and in fact, it takes approximately a minimum 5 to 6 hours from starting to dissolve the aqueous flocculant solution until adding it to sludge because storage hours are also counted. Thus, deterioration which occurs during dissolution and storage is huge, and the flocculation quality that the polymer flocculant originally possessed will not be exerted.

In the method described in non-patent document 1, the deterioration during dissolution is not prevented and flocculation quality of the polymer flocculant is not well exerted so that dissolution difficulty of the powdery polymer flocculant is not improved.
In the methods of the above patent documents 1 and 2, the dissolution time of the powdery polymer flocculant can be shortened, but time deterioration of the polymer flocculant is not considered at all and flocculation quality of the polymer flocculant is not efficiently exerted.

The present invention is provided in view of these circumstances, and its problem to provide a flocculation treatment of sludge or wastewater that well exercises the quality of flocculation of a polymer flocculant in the flocculation treatment of sludge or wastewater by using a powdery polymer flocculant.

### [Means for Solving the Problem]

To solve the above issues, this invention provides a swelling step which prepares a swelling liquid by adding a powdery polymer flocculant to water, and a dissolution step which obtains an aqueous flocculant solution by supplying the swelling liquid to a filtration component and passing a filtering area of the filtration component, and a flocculation treatment step which adds the aqueous flocculant solution to sludge or wastewater, and provides a treating method of sludge or wastewater which the total processing time from the time point where the powdery polymer flocculant was added to water until just before adding to sludge or wastewater as the aqueous flocculant solution is less than 3 hours.
Retention time at the time of swelling from the time of adding the aforementioned powdery polymer flocculant in water until passing through the filtration component as the aforementioned swelling liquid can be more than 10 seconds but less than 20 minutes.
In addition, the aforementioned filtration component can be a sieve opening of 120-500 µm.
Also, the concentration of the powdery polymer flocculant in the swelling liquid can be 0.05-0.5 mass%.

### [Effects of the Invention]

According to the treatment method of the present invention, flocculation quality of a polymer flocculant can be well effectively exerted by preventing deterioration before adding a polymer flocculant to sludge and wastewater in flocculation treatment of sludge or wastewater using a powdery polymer flocculant.

### BEST MODE FOR CARRYING OUT THE INVENTION

The present invention is explained in detail as follows.

### <Powdery polymer flocculant >

A powdery polymer flocculant is used in the present invention. A powdery polymer flocculant has advantages of good preservation quality compared to liquid form or emulsion form, and quality in preservation is hardly deteriorated. In addition, the time period of a solution state can be shorten by dissolving the powdery polymer flocculant on use, and deterioration of the quality of an aqueous flocculant solution can be controlled. Furthermore, since polymer flocculants are powdered, shipping charge is cheap, and storage and handling are advantageous.

Any powdery polymer flocculant (hereinafter also referred to as polymer flocculant) among polymer flocculants used conventionally for flocculation treatment of sludge or wastewater in the present invention can be used, and it is available from articles on the market.
The average particle diameter of the powdery polymer flocculant is not limited in particular, but when solubility in water is considered, an average particle diameter of 50-3,000 µm is preferred and 100-2,000 µm is more preferable.

Cationic polymer flocculants, anionic polymer flocculants, nonionic polymer flocculants and amphoteric polymer flocculants can all be used as the polymer flocculant in the present invention.
For cationic polymer flocculants, a homopolymer of acryloyloxy ethyl trimethylammonium chloride or a copolymer (hereinafter, stated as "(co)polymer") with an other water-soluble monomer, a (co)polymer of methacryloyloxy ethyl trimethylammonium chloride, an acryloyl cationic polymer flocculant of a (co)polymer of (meta)acryloyloxy ethyl benzyl dimethyl ammonium chloride, a polyamidine amidine cationic polymer flocculant and polyvinylamine are exemplified.
For anionic polymer flocculants, a (co)polymer of acrylic amide and acrylic acid or a salt thereof a partial hydrolysate of an acrylic amide polymer, a (co)polymer of acrylic amide and 2-acrylic amide-2-methyl propanesulfonic acid or a salt thereof (co)polymers of acrylic amide, acrylic acid or a salt thereof and 2-acrylic amide - 2-methyl propanesulfonic acid or a salt thereof are exemplified.
For nonionic polymer flocculants, polymers of acrylic amide are exemplified.
For amphoteric polymer flocculants, ternary or quaternary copolymers of (meta) acryloyloxy ethyl trimethylammonium chloride - acrylic amide - acrylic acid are exemplified.
In each of aforementioned flocculants, it may copolymerize the other neutral water-soluble monomers that can copolymerize, and may include hydrophobic monomers that can copolymerize as long as water solubility can be maintained.

The molecular weight of the polymer flocculant is not limited in particular. There are a variety of polymer flocculants, those having a high molecular weight such as more than ten million to those having a low molecular weight such as several million, and a polymer flocculant of any molecular weight works in this invention. Usually, more time is required dissolving the higher molecular weight polymer flocculants, however, in this invention, high molecular weight polymer flocculants can be dissolved promptly, and the aqueous flocculant solution can be adjusted without leaving undissolved flocculant referred to as undissolved lumps of powder.

### <Swelling step>

In the treatment method of this invention, at first, the powdery polymer flocculant is added to water to obtain a swelling liquid in which the swelling product (swollen gel) of this polymer flocculant is dispersed (swelling step).
The swelling step, for example, supplies the powdery polymer flocculant and water continuously or discontinuously from an entrance side of a dispersion tank. The swelling liquid may be discharged continuously or discontinuously, or may be discharged batch-wise from an outlet side of the dispersion tank.
The swelling liquid obtained in the main step is supplied to the filtration component.

Water used in the main step is not limited in particular.
When powdery polymer flocculants are generally dissolved in water which mostly does not contain impurities such as clean water, deterioration of the polymer flocculant is comparatively small, but when polymer flocculants are dissolved in water that contains impurities such as water for industrial use, treat water of activated sludge treatment, well water and river water, viscosity declines chronologically, and severe deterioration such as advanced hydrolysis of the polymer flocculant is known to happen.
However, choice of water is not generally possible for some water places, and there was only a way to use deteriorated flocculants in the conventional way.
On the other hand, according to the method of the present invention, the quality that the flocculant originally has can be maintained and deterioration is prevented to a minimum by dissolving the polymer flocculant instantly and using in short periods. In other words, in circumstances using water which is not purified, advantages offered by the invention are shown conspicuously. To be able to use water for industrial use, treat water, well water and river water for the swelling step is preferable from the point of reducing cost.
In addition, deterioration is fast in the conventional approach even when powdery polymer flocculants are dissolved in water including a lot of metal ions. However, according to the present invention, deterioration of the polymer flocculant can be suppressed even if, for example, water including a lot of metal ions such as more than 1 ppm of a ferrous ion.

Powdery polymer flocculants are preferred to adjust the concentration of the polymer flocculant in the swelling liquid in the range of 0.05 to 0.5% by mass in the step. If the concentration of the polymer flocculant is less than 0.05% by mass, deterioration becomes severe chronologically, and it is not effective since a large amount of water is required. If the concentration of the polymer flocculant in the swelling liquid is more than 0.5% by mass, the viscosity of the swelling liquid rises too high so that transportation and filtration become recalcitrant which is not practical.

The method of adding the powdery polymer flocculant to water is not limited in particular, however, it is preferred not to add all of the polymer flocculant at once, for example, adding the polymer flocculant with a feeder stirring to water being stirred at a constant speed to reduce generation of undissolved lumps of powder.
Feed speed of the powdery polymer flocculant is not limited in particular, but determines the speed from a ratio with water to be concentration.

After having added the powdery polymer flocculant to water, it is preferred to stay underwater to swell for a predetermined time. When the powdery polymer flocculant stays underwater, stirring may be stopped or it may be continued. It is desirable to stir at a necessary minimum to disperse the added polymer flocculant uniformly in the water from the point of suppressing deterioration of the polymer flocculant.
In the swelling step, from the point where the powdery polymer flocculant added to water, it starts to supply to the filtration component as the swelling liquid. The retention time at the time of swelling before passing the filtration component is not determined by kind of flocculant, molecular weight, and/or powdery particle diameter, but a retention time of less than 20 minutes is preferred.
For example, in cationic polymer flocculants, some of the comparatively low molecular weight flocculants swell instantly, but usually swell enough in around 30 seconds to 3 minutes. Swelling speed is slow in the case of high molecular weight anionic or nonionic polymer flocculants in particular, and some require around 20 minutes to swell.
In addition, when the swelling step is performed in a batch cycle, "the time point where the powdery polymer flocculant was added to water" is meant as the time point where adding of the powdery polymer flocculant has finished.
Besides, "to the time point where polymer flocculant passes the filtration component as the swelling liquid" means "to the time point where passed the filtering area", and when a swelling step is performed in a batch cycle, a process which supplies swelling liquid to a filtration component and to pass filtration area (dissolution production-process) means the time point where all of swelling liquid supplied by the filtration component has finished passing the filtering area.

In the next dissolution step, it is hard for the swelling liquid to pass the filtration component since virtual viscosity of the swelling liquid rises extremely if the retention time at the time of swelling becomes larger than 20 minutes. In addition, when pressure to push the swelling liquid towards the filtering area of the filtration component from a supply-side of the filtration component is provided and passed forcibly, pressure of a supply-side of filtration component increases when the swelling product (swollen gel) passes an open hole (for example, mesh) of the filtering area so that the shear force to receive rises when the virtual viscosity of swelling liquid rises, which leads to polymer deterioration easily.
A lower limit of retention time at the time of swelling cannot be flatly determined. Viscosity of a free water phase which exists between swollen gel and swollen gel when retention time at the time of swelling is lacked becomes in a low condition in flocculant powder of high molecular weight. The swollen gel is hard to pass the filtering area of filtration component since the free water phase instantly passes through at the time of filtration. In addition, blocking of the filtering area may be generated by non-swollen gel.
Polymer deterioration by the shear force is easy to happen in the same as the above so that the pressure of the supply-side of the filtration component rises when blocking generates in a part of the filtering area at the point where pressure is forcibly given to the swelling liquid from the supply-side of the filtration component in particular.
Thus, it is preferred to set the retention time at the time of swelling not to produce such an inconvenience.
The swelling product (swollen gel) tends to aggregate easily depending on the type of polymer flocculant in the swelling liquid, therefore a granulation should be performed at lower than a 1 cm particle diameter beforehand before supplying the polymer flocculant in the swelling liquid to the filtration component from the point of raising solubility. For example, such a granulation can be conducted by passing through a filtration component having open holes 1 to 0.5 cm in diameter.

### <Dissolution step>

Subsequently, the swelling liquid provided in the swelling step is supplied to the filtration component, and makes the swelling product (swollen gel) of the polymer flocculant refined and dissolved by passing the filtering area. This dissolution step may be conducted in a continuous way or in a batch-wise.
As the dissolution step, the total amount of the swelling liquid which is supplied to the filtration component is set to pass the filtering area. To do so, for example, pressure to push the swelling liquid towards the filtration component from the supply-side of the filtration component is given, and forcibly passing is preferred.
For a method to give pressure, for example, a method to force with rollers are provided for facies medialis of a peripheral surface (filtering area) with supplying swelling liquid to the inside of pipe-shaped component that a peripheral surface becomes reticular-shaped filtration.
The swelling product in the swelling liquid is refined by passing the filtering area of the filtration component and therefore becomes easy to dissolve in water. Thus, even if stirring power is not added positively in the liquid after having passed the filtering area, the polymer flocculant dissolves and an aqueous flocculant solution can be obtained. The aqueous flocculant solution, which was obtained in this way, is used for flocculation treatment step by adding to sludge or wastewater not just pooling or once after having pooled aqueous flocculant solution. When polymer flocculant is hard to comparatively dissolve, for example, anionic or nonionic polymer flocculants of high molecular weight is preferred to pool to a storage tank once.

The filtering area of the filtration component has a lot of through-holes, a material of filtering area is not limited in particular as long as the material is able to endure added pressure when the filtered swelling products of the polymer flocculant passes forcibly. A reticular-shaped filter area of the filtration component is preferred, for example, a metallic mesh is used.
As for the sieve opening in the filtering area, 120-500 µm is preferred, and 150-300 µm is more preferred. Flocculant quality by the polymer flocculant is not provided enough so that minute swelling product of polymer flocculant stays in the liquid after having passed the filtering area when sieve openings exceed 500 µm. On the other hand, when the sieve opening is under 120 µm, time is required for the swelling liquid to pass the filtering area and deterioration occurs easily by the shear force to the polymer flocculant when passing.
Filtering area may consist of a single-layer, or it may be a multilayer structure. Multilayer is more preferred as an intensity point of view. Several layers of the same sieve opening may be put, and different sieve opening may be put on top of one another when a reticular-shaped filter is used for a multilayer structure. When stacking same sieve openings in layers, pile slightly bigger sieve opening, and when stacking different sieve openings in layers, the smallest sieve opening should be 120-500 µm.

The speed (filtration velocity) when the swelling liquid passes the filtering area of the filtration component depends on methods to give pressure to the swelling liquid at the time of filtration, however it is preferred for swelling liquid to pass less than 1 m³/min per 1m² of filter area. As long as the filtration velocity is in this range, deterioration of the polymer flocculant can be suppressed well.

In the present invention, the total processing time from the time point where the powdery polymer flocculant was added to water in the swelling step until just before adding to sludge or wastewater as the aqueous flocculant solution after a dissolution process is considered to be less than 3 hours. Deterioration of polymer flocculant progresses in more than 3 hours, and fundamental quality of the polymer flocculant is severely vitiated. The preferred total processing time is within 10-120 minutes. In addition, the polymer flocculant has little deterioration in the swelling state. However, it is easy to deteriorate as the state that dissolved in water and it is thought that deterioration is caused intensely from early phase of dissolution. Thus, it is preferred to use the polymer flocculant once it starts dissolving in water for flocculation treatment in a short time as possible.
In addition, it is preferred to raise the velocity of dissolution by refining the swelling product of polymer flocculant to a small grain diameter in the dissolution step to shorten the aforementioned total processing time. Besides, it is preferable not to lengthen retention time in the swelling step more than required. When it further pools after the dissolution step once, the capacity of the pool tank should be lowered as much as possible to shorten retention time in the pool tank, and up to one hour or less is desirable.

### <Flocculation treatment step>

A subject of the flocculation treatment step in the present invention is fractionated to a sludge treatment or a wastewater treatment by kind of suspended matter in water.
A subject making flocculation in a sludge process is an organic compound mainly, and sludge generated by wastewater treatment such as livestock raising wastewater, fish meat wastewater other than public sewage sludge generating in a sewage disposal plant collected for kind of sludge by public sewage effluent is given. In sludge processes an example of the most preferred flocculant is cation polymer flocculant.
Treatment of sludge is generated by adding an aqueous flocculant solution to sludge to separate suspended matter from water, and process dehydration of suspended matter (flocculated sludge) which flocculated by dehydrators.
There is no limit in particular in the form of the dehydrators that are used for dehydration of flocculated sludge. A press dehydrator, a centrifugal dehydrator and a multiplex disk-shaped dehydrator are exemplified.

On the other hand, a subject making flocculation in wastewater treatment is mainly inorganic, and gravel washing wastewater, mucky water produced at the time of dredging seashores, rivers and lakes, factory wastewater and mine effluent are given as examples of wastewaters. Anionic polymer flocculants and/or nonionic polymer flocculants are given as examples of the most suitable flocculants.
Treatment of wastewater is to make suspended matter of the whole wastewater flocculated by adding a polymer flocculant in wastewater. Separation treatment or dehydration treatment of the flocculated product (suspended matter) is performed by gravitations so as to precipitate flocculated suspended matter.
Heretofore known inorganic flocculants used conventionally for flocculation treatment of sludge or wastewater can be used in combination for convenience on any of sludge treatment and wastewater treatment. Sulfuric acid band, polyaluminum chloride, ferrous sulfate, ferric chloride, polyferric sulfate are examples of such inorganic flocculants.

The treatment method of the present invention can be conducted in a continuous system to be able to conduct preparation of an aqueous flocculant solution in an extremely short time.
For example, concatenation dissolution feeder having the pump that feed liquid which passed a roller and filtering area to give pressure to push for the filtering area and the filtration component is used. At first, powdery polymer flocculant is mixed with specified amount of water in a tank to swell, and the obtained swelling liquid is forcibly passed with a roller while supplying the swelling liquid to filtration component continually. The aqueous flocculant solution which passed filtering area can be supplied to sludge and a wastewater treatment facility with a pump with pooling or without pooling the aqueous flocculant solution.
Deterioration of the polymer flocculant can be minimized by conducting in a continuous system, and facilities become very compact. Thus, it is practical without needing large-scale dissolution supply facilities and a site.

In the treatment method of the present invention, after having swelled a powdery polymer flocculant by adding to water, the powdery polymer flocculant is dissolved in short time by passing the filtration component to refine. Since the aqueous flocculant solution is added to sludge or wastewater from the time point where powdery polymer flocculant is added to water within 3 hours, flocculation treatment with minimized deterioration of the dissolved polymer flocculant can be carried out.
Thus, flocculation quality by the polymer flocculant improves in sludge or wastewater flocculation treatment which the polymer flocculant was used in, and flocculation and dehydration efficiency improve since flocculation quality by the polymer flocculant in sludge or wastewater is able to flocculate thickly suspended matter of sludge or the whole wastewater.

In the present invention, other than the total processing time is short, next is considered as one of the reasons why sludge of the polymer flocculant and flocculation quality for wastewater rise. In other words, the polymer flocculant exists as a swollen gel which is hard to deteriorate in the swelling liquid in the present invention, whereas deterioration of molecule that dissolved in dissolution step earlier progresses when polymer flocculant was dissolved in a dissolution step by conventional stirring. Deterioration processing in the dissolution step can be controlled to be in a condition of a diffluent state because the swollen gel passes the filtering area of the filtration component.
In addition, for a different reason, it is conceivable that the shear force which the polymer flocculant receives is small compared with the dissolution method by conventional stirring, so as to be able to dissolve without giving stirring to the polymer flocculant as the method of the present invention. In particular, after having passed the filtering area of the filtration component, the shear force given to dissolved molecules is equal to nothing, and deterioration of the polymer flocculant shrinks as a whole. In addition, because the shear force given to the polymer flocculant is small, minute macromolecular entanglement is held in a dissolution operating process. As a result, expanse of the molecular chain in water grows big is presumed with the reason why flocculation quality rises.
Moreover, as the insoluble gel content which has remained in an aqueous flocculant solution by conventional stirring can be dissolved and exert flocculation quality in the present invention method since high molecular weight polymer flocculants which are hard to be dissolved by the conventional approach can be dissolved easily in the present invention.

In addition, in the treating method of the present invention, operating conditions such as change of an additive amount of the polymer flocculant and a brand change of the flocculant can be changed easily in a short time since the powdery polymer flocculant which was added to water is added to sludge or wastewater in a relatively short time. Thus, it can respond for sludge or a sudden fluctuation of wastewater quickly, and the treating process can be always conducted optimally.

The treating method of the present invention can obtain the effect to improve flocculation quality by any polymer flocculant since the treating method can be applied to the wide range because the treating method does not choose the kind of polymer flocculant, kind of sludge and kind of wastewater.

### [Examples]

The present invention is explained using embodiment in detail as follows, but is not limited to this range unless the purpose of this patent is exceeded.

### <Methods for preparing aqueous flocculant solution>

### (Preparation Example 1)

Preparation and supply of an aqueous flocculant solution was carried out by a rotary flocculant concatenation dissolution feeder which comprises a filtration component which is a cylinder-shaped and its filtering area of the peripheral surface is 200 µm sieve opening, and a roller having the elastic bodies which revolved with touching inner peripheral surface of the filtration component, and a pump which transports the aqueous flocculant solution passed from inner side to outside of the filtration component. In other words, after having added the polymer flocculant at a constant speed so that the concentration became 0.2% by mass while stirring well water, stirring was stopped and the polymer flocculant swelled. The swelling liquid after swelling was supplied to the inside of the filtration component of the flocculant concatenation dissolution feeder and made to pass the peripheral surface (filtering area) and pushed outward, and an aqueous flocculant solution was obtained. From the time point which supplied the swelling liquid to the filtration component before finishing passing the filtering area was 0.5 minutes. In addition, the filtration velocity was 0.23 m³/min per filtering area 1m². It was 2 minutes for the retention time at the time of swelling from the time point when the powdery polymer flocculant was added to water to pass the filtration component as the swelling liquid.
After having made an obtained aqueous flocculant solution stay temporary, flocculation treatment was conducted by adding the aqueous flocculant solution to sludge.
The total flocculation treatment time from powdery polymer flocculant was added to water to powdery polymer flocculant being added to sludge was 20 minutes.

### (Preparation Example 2)

After having prepared an aqueous flocculant solution by similar method as Preparation Example 1, after having left an obtained aqueous flocculant solution unattended in a beaker for 178 minutes, it was subject to treating method.
The total processing time in this example in total was 180 minutes.

### (Preparation Example 3)

After having prepared an aqueous flocculant solution by a similar method as Preparation Example 1, after having pooled in storage with an obtained aqueous flocculant solution for 298 minutes, it was subjected to treating method.
The total processing time in this example in total was 300 minutes.

### (Preparation Example 4)

A dasher having two pieces of paddle wings (an arm span, 1/2 of beaker diameter) was assembled to the beaker which contained 500 g of well water, and 1.0 g of powdery polymer flocculant was added little by little at a constant speed while stirring at 250 rpm. After dissolving while stirring at 250 rpm for four hours, it was subjected to a flocculation treatment after pooling for one hour. (This example was a normal method, and the total processing time was 300 minutes.)

### < Assessment procedure of flocculation quality >

Flocculated sludge obtained by a flocculation treatment was evaluated by the following methods.

### [Flocculation dehydration testing method of sludge]

A given amount of an aqueous flocculant solution was added to 300ml of sludge, and flocculated by stirring with a spatula for 30 seconds, and then evaluation was conducted.
(1) Filtering efficiency: Sludge after the stirring (flocculated sludge and water) was filtered with 48 mesh filter cloth, and filtering efficiency was evaluated by measuring the amount of filtrated water for 10 seconds.
(2) Dewaterability: Flocculated sludge which remained on filter cloth by the filtration described above was first compressed at 0.02 MPa for 30 seconds, then compressed at 0.05 MPa for 30 seconds and subsequently compressed at 0.1 MPa for 60 seconds, and dewaterability was evaluated by measuring the water content of the sludge cake obtained from this procedure.

### [Flocculation test method of wastewater]

50g of seashore dredged material (TS 58.2 %) described in Table 2 was measured in a 2 L beaker and artificial sea water was added to the beaker to make the total volume 1,000 ml with stirring and mixing to prepare mucky water for testing. The mucky water were aliquot to 100 ml each to Nessler's color comparison tube which has a 100 ml scale at a test tube stand, and a flocculation test was performed.
The flocculation test was to measure sedimentation velocity of interfacial surface with a flocculated floc strata and a water layer in static after adding a given amount of aqueous flocculant solution to the tubes, and mixed gently for ten times with the cap closed.
Because of the turbulent flow at an early stage and late sedimentation due to buffering between flocs in the latter half of the flocculation test, the time to pass at the line of 90-60 ml which constantly settled out was measured, and sedimentation velocity (cm/min) which was converted into distance, was calculated. A larger value is better.
In addition, a capacity value of the cake which precipitated after 10 minutes in static, more specifically, an interfacial scale with a flocculation floc stratum and a water stratum was recorded to measure consolidation capability. A smaller value is better.

### [Polymer flocculant test specimen]

Powdery polymer flocculants 1-4 used in the below examples are shown for Table 1. Mw in the list is mass mean molecular weight of a polystyrene conversion standard by gel permeation chromatography.

**[Table 1]**

| | Type of flocculant | Composition |
|---|---|---|
| 1 | Cationic flocculant | Methacryloyloxy ethyl trimethylammonium chloride: 100 mass% Mum=300 million |
| 2 | Cationic flocculant | Acrylic amide/Acryloyloxy ethyl trimethylammonium chloride/Methacryloyloxy ethyl trimethylammonium chloride: |
| | | 10/75/15 mass% Mw=600 million |
| 3 | Amphoteric flocculant | Acrylic amide/Acryloyloxy ethyl trimethylammonium chloride/Methacryloyloxy ethyl trimethylammonium chloride/Acrylic acid: |
| | | 40/30/20/1 0 mass% Mw=500 million |
| 4 | Anionic flocculant | Acrylic amide/Sodium acrylate: |
| | | 80/20 mass% Mw=1600 million |

### [Test sludge and wastewater specimen]

The dredged spoil used for sludge which was used in the below example and preparation of wastewater is represented in Table 2.
In addition, sludge concentration TS (unit: mass%) is a solid content concentration in sludge or wastewater, and is the value obtained from measuring the solid content which dried with a dryer of 110 degrees Celsius until being a constant mass.

**[Table 2]**

| | Type of sludge | Sludge concentration TS (mass%) | pH |
|---|---|---|---|
| Sludge A | Mixed crude sludge | 2.4 | 6.5 |
| Sludge B | Extra sludge (Excreta disposal) | 3.0 | 6.8 |
| Sludge C | Digestive sludge | 1.7 | 7.4 |
| Dredged spoil | Dredged spoil of Tokyo bay | 58.2 | 6.7 |

### (Example 1 to 5)

A flocculation dewatering test was performed with sludge A and powdery polymer flocculant 1, by preparing an aqueous flocculant solution using the same method as Preparation Example 1. However, the sieve opening of the filtration component was changed as shown in Table 3. The amount of the aqueous flocculant solution which was added to sludge A was set to 0.4 mass% of polymer flocculant concentration (similar as follows) against a solid body.
Assessment results of filtering efficiency (filtrated water) and dewaterability (cake water content) are shown in Table 3. In addition, the viscosity of the prepared aqueous flocculant solution measured with a Bourque field model rotation viscometer in a constant-temperature bath of 25 degrees Celsius at 12 rpm is shown in Table 3.

**[Table 3]**

| | Sieve opening of filtration component (µm) | Aqueous solution viscosity (mPa·s) | Assessment results | |
|---|---|---|---|---|
| | | | Amount of filtrated water (ml/10 sec) | Moisture content of cake (mass%) |
| Example 1 | 120 | 312 | 118 | 79 |
| Example 2 | 200 | 320 | 135 | 76 |
| Example 3 | 500 | 301 | 120 | 78 |
| Example 4 | 100 | 253 | 98 | 87 |
| Example 5 | 750 | 278 | 102 | 85 |

Filtering efficiency and dewaterability of flocculated sludge in flocculation treatment of sludge was superior in Examples 1 to 3 according to the results shown in Table 3. Filtration velocity became slow with Example 4, which had a sieve opening of 100 µm, and the flocculation effect compared with Examples 1 to 3 was inferior. This was caused due to deterioration of molecule flocculant since a shear force was generated when pressure rose at the time of filtration. In Example 5, which had a sieve opening of 750 µm, there was a micro gel which could be seen in the aqueous flocculant solution. Because lysis of the polymer flocculant decreased in this Example 5, it is thought that the flocculation effect compared with Examples 1 to 3 was inferior.

### (Examples 6 to 11)

A flocculation dewatering test was performed with sludge A and powdery polymer flocculant 1, by preparing an aqueous flocculant solution using the same method as Preparation Example 1. However, after the powdery polymer flocculant was added and stird in water, retention time at the time of swelling changed what is shown in Table 4 by adjusting the swelling time before filtering. The amount of the aqueous flocculant solution which was added to sludge A was set to 0.4 mass% for a solid body which was the same as Examples 1 to 5. Assessment was performed in the same way as Examples 1 to 5, and the results are shown in Table 4. The results of Example 2 are also shown in Table 4.

**[Table 4]**

| | Retention time of swelling (min) | Assessment results | |
|---|---|---|---|
| | | Amount of filtrated water (ml/10 sec) | Moisture content of cake (mass%) |
| Example 6 | 1 | 126 | 78 |
| Example 2 | 2 | 135 | 76 |
| Example 7 | 10 | 138 | 75 |
| Example 8 | 20 | 137 | 76 |
| Example 9 | 0 | Maladjustment due to clogged filter | |
| Example 10 | 30 | 112 | 82 |

According to the results in Table 4, filtering efficiency and dewaterability of flocculated sludge in flocculation treatment of sludge was superior in Examples 2, 6 to 8, which assumed a retention time at the time of swelling of 1 to 20 minutes. Example 9 is an example which supplied the powdery polymer flocculant to the filtration component without taking the retention time at the time of swelling after having added to water and dispersing, but only water could be outrun in a site just before the filtration component, and it was not possible to prepare an aqueous flocculant solution due to further clogged mesh.
The effect of flocculation was slightly inferior in Example 10, which assumed a retention time at the time of swelling of 30 minutes. This may be due to the deterioration of the polymer flocculant by the shear force which pressure rises at the time of passing the filtering area because the viscosity of a visual swelling liquid rises due to excessive advance of polymer flocculant.

### (Examples 11 to 19)

Type of powdery polymer flocculant and preparation methods of aqueous flocculant solution were changed as shown in Table 5, and flocculant dewatering tests of sludge which its types are shown in Table 5 were performed by the aqueous flocculant solution obtained from each example. The amount of the aqueous flocculant solution which was added to the sludge was set as shown in Table 5. Assessment was performed in the same way as Examples 1 to 5, and the results are shown in Table 5. The results of Example 2 are also shown in Table 5.

**[Table 5]**

| | Type of powdery polymer flocculant | Preparation method of aqueous flocculant solution | Total processing time (min) | Flocculant additive amount (vs. solid body mass%) | Type of sludge | Assessment results | |
|---|---|---|---|---|---|---|---|
| | | | | | | Amount of filtrated water (ml/10 sec) | Moisture content of cake (mass%) |
| Example 2 | 1 | Preparation Example 1 | 20 | 0.4 | A | 135 | 76 |
| Example 11 | 1 | Preparation Example 2 | 180 | 0.4 | A | 121 | 78 |
| Example 12 | 1 | Preparation Example 3 | 300 | 0.4 | A | 105 | 82 |
| Example 13 | 1 | Preparation Example 4 | 300 Conventional method | 0.4 | A | 100 | 84 |
| Example 14 | 2 | Preparation Example 1 | 20 | 0.6 | B | 122 | 85 |
| Example 15 | 2 | Preparation Example 3 | 300 | 0.6 | B | 90 | 89 |
| Example 16 | 2 | Preparation Example 4 | 300 Conventional method | 0.6 | B | 88 | 90 |
| Example 17 | 3 | Preparation Example 1 | 20 | 0.9 | C | 128 | 84 |
| Example 18 | 3 | Preparation Example 3 | 300 | 0.9 | C | 91 | 88 |
| Example 19 | 3 | Preparation Example 4 | 300 Conventional method | 0.9 | C | 84 | 90 |

According to the results of Table 5, Examples 2, 14 and 17, in which the total processing time after making more powdery polymer flocculant come in contact with water before using was 20 minutes (Preparation Example 1), and Example 11, in which the total processing time was 180 minutes (Preparation Example 2), were superior in dewaterability of filtering efficiency and flocculation sludge in flocculation treatment of sludge. In addition, according to the results of Examples 2, 14 and 17, fine flocculation quality was obtained in a similar fashion when the most adequate type of flocculant was changed depending on the kind of sludge.
Examples 12, 15 and 18, in which the total processing time was 300 minutes (Preparation Example 3), was inferior in flocculation quality, and Examples 13, 16 and 19, which dissolved powdery polymer flocculant by stirring for 4 hours in the conventional method and pooled (Preparation Example 4) for 1 hour, were much inferior in flocculation quality.

### (Examples 20 to 24)

Using powdery polymer flocculant 4 (Acrylic amide/Acrylic acid soda copolymer (80/20 mass ratio)) shown in Table 1, an aqueous flocculant solution of 0.1 mass% was prepared in a similar fashion as Preparation Example 1 except for adjusting the mass% to 0.1. However, retention time after filtration was set so that the total processing time becomes as shown in Table 6.
A flocculation test was conducted in accordance with flocculation test methods of wastewater using an obtained aqueous flocculant solution. The amount of aqueous flocculant solution which was added to wastewater was set to 2 ppm in the concentration of polymer flocculant in suspending solution.
Assessment results of the sedimentation velocity and the cake capacity are shown in Table 6.

### (Example 25)

Using the powdery polymer flocculant 4 shown in Table 1, an aqueous flocculant solution of 0.1 mass% was prepared in a similar fashion as Preparation Example 4 except for adjusting the mass% to 0.1. Flocculation tests of wastewater were performed with the obtained aqueous flocculant solution in a similar fashion as Examples 20 to 24. Assessment results are shown in Table 6.

**[Table 6]**

| | Total processing time (min) | Assessment results | |
|---|---|---|---|
| | | Sedimentation velocity (cm/min) | Cake content (ml) |
| Example 20 | 10 | 46.4 | 12 |
| Example 21 | 30 | 48.2 | 12 |
| Example22 | 60 | 46.1 | 12 |
| Example 23 | 180 | 43.7 | 12.5 |
| Example 24 | 300 | 36.5 | 13.5 |
| Example 25 | 300 Conventional method | 32.3 | 14 |

Superior flocculation quality in flocculation treatment of wastewater was obtained in Examples 20 to 23, in which the total processing time was less than 3 hours, according to the results of Table 6.
Example 24, in which the total processing time was 5 hours and the powdery polymer flocculant which envisaged conventional method was dissolved for 4 hours with stirring. Example 25, which pooled for 1 hour (Preparation Example 4) was extremely inferior in flocculation quality. Disconnection of molecule would have been generated when the entirety has finished dissolving, since deterioration of the part which dissolved during stirring in Example 25 progresses chronologically, therefore it is thought that the original performance of the polymer flocculant would not be exercised.

### INDUSTRIAL APPLICABILITY

According to the treatment method of the present invention, flocculation quality of a polymer flocculant can be well effectively utilized by preventing deterioration before adding a polymer flocculant to sludge and wastewater in flocculation treatment of sludge or wastewater using a powdery polymer flocculant.

## Claims

1. A method of treating sludge or wastewater comprising:
a swelling step in which a swelling liquid is prepared by adding a powdery polymer flocculant to water;
a dissolution step which obtains an aqueous flocculant solution by supplying the swelling liquid to a filtration component and passing a filtering area of the filtration component; and
a flocculation treatment step which adds the aqueous flocculant solution to sludge or wastewater,
wherein a treating method of sludge or wastewater which the total processing time from the time point where the powdery polymer flocculant was added to water until just before adding to sludge or wastewater the aqueous flocculant solution is less than 3 hours.

2. The treating method of sludge or wastewater according to claim 1, wherein the retention time of swelling from the time point where the powdery polymer flocculant is added to water to the time point before the swelling liquid passes the filtration component is equal to or more than 10 seconds and equal to or less than 20 minutes.

3. The treating method of sludge or wastewater according to claim 1 or 2, wherein the filtration component is a reticulate having a sieve opening of 120-500 µm.

4. The treating method of sludge or wastewater according to any one of claims 1 through 3, wherein a concentration of the powdery polymer flocculant in the swelling liquid is 0.05-0.5 % by mass.
